# EUROPÄISCHE PATENTSCHRIFT

(11) **EP 2 270 949 B1**
(45) Veröffentlichungstag und Bekanntmachung des Hinweises auf die Patenterteilung: **25.02.2015**
(21) Anmeldenummer: 10006817.0
(22) Anmeldetag: 01.07.2010
(51) Int. Cl.: H02J 3/38, H02J 3/32

(54) **Verfahren zur Versorgung eines Verbrauchers mit elektrischer Energie**
Method for supplying a consumer with electrical energy
Procédé d'alimentation d'un consommateur en énergie électrique

(30) Priorität: 01.07.2009 DE 102009031422
(43) Veröffentlichungstag der Anmeldung: 05.01.2011
(73) Patentinhaber: LichtBlick ZuhauseKraftwerk GmbH, 20359 Hamburg (DE)
(72) Erfinder: Appel, Christian, Dipl.-Ing., 25462 Rellingen (DE)
(74) Vertreter: Maiwald Patentanwalts GmbH

(56) Entgegenhaltungen:
- WO-A2-2009/155445
- JP-A- 2000 295 784
- TADOKORO T ET AL: "A PHOTOVOLTAIC-DIESEL HYBRID GENERATION SYSTEM FOR SMALL ISLANDS", WORLD CONFERENCE ON PHOTOVOLTAIC ENERGY. WAIKOLOA, DEC. 5 - 9, 1994; [WORLD CONFERENCE ON PHOTOVOLTAIC ENERGY], NEW YORK, IEEE, US, Bd. CONF. 1, 5. Dezember 1994 (1994-12-05) , Seiten 708-715, XP000681339,

## Beschreibung

Die vorliegende Erfindung betrifft ein Verfahren für die Versorgung mindestens eines Verbrauchers mit elektrischer Energie. Der mindestens eine Verbraucher wird dabei mit Energie aus einer elektrischen Gleichspannungsquelle und/oder einer elektrischen Wechselspannungsquelle versorgt. Ein erfindungsgemäßes Steuerelement stellt, beispielsweise unter Berücksichtigung von empfangenden Daten, eine elektrisch leitende Leitungsverbindung zu mindestens einer der Spannungsquellen her. Die empfangenden Daten geben eine der Spannungsquelle vor und/oder abhängig beispielsweise von einer Verbraucherleistung sein. Durch dieses Verfahren kann die Leistungsversorgung des mindestens einen Verbrauchers unabhängig von nur einer Spannungsquelle sichergestellt werden und/oder besonders vorteilhaft variabel gestaltet werden. Durch eine vorgebare Schaltung des Leistungsbezugs kann jeweils, insbesondere unter Berücksichtigung von mindestens einem Leistungsbezugsparameter, eine besonders vorteilhafte, schaltbare, elektrische Leitungsverbindung zu mindestens einer der Spannungsquellen durch das Steuerelement hergestellt werden.

Aus dem Stand der Technik sind Verfahren zur Versorgung mindestens eines Verbrauchers bekannt. In der Regel weisen diese jedoch nur eine Spannungsquelle auf, entweder eine Wechselspannungsquelle oder eine Gleichspannungsquelle.

Beispielsweise wird in der WO 20091155445 A2 ein System und ein Verfahren beschrieben, mit dem elektrische Energie aus Photovoltaik-Anlagen über einen Wechselrichter in eine Energiespeichervorrichtung und/oder in ein Versorgungsnetz gespeist werden kann. Die JP 2000 295784 A1 beschreibt hingegen ein Energiespeichersystem, bei dem abhängig von der Tageszeit und/oder den Verbrauchswerten unterschiedliche Batterietypen geladen oder entladen werden. Über eine Steuerung wird so die in den Batterien gespeicherte Energie möglichst effizient eingesetzt.

Die Versorgung eines Verbrauchers mit elektrischer Leistung aus einem öffentlichen Versorgungsnetz kann beispielsweise als ein Verfahren zur Versorgung eines Verbrauchers angesehen werden. Das öffentliche Versorgungsnetz, als Wechselspannungsquelle, versorgt dabei Verbraucher mit elektrischer Energie. Im Sinne dieser Erfindung kann auch ein Anschluss, insbesondere ein Hausanschluss, an ein Versorgungsnetz, insbesondere an ein Niederspannungsnetz, vorzugsweise ein öffentliches Niederspannungsnetz, als eine erfindungsgemäße Wechselspannungsquelle angesehen werden. Andere geeignete Wechselspannungsquellen können beispielsweise Windenergieanlagen und/oder Blockheizkraftwerke (BHKW) sein, die Verbraucher während ihres Betriebs mit elektrischer Energie versorgen können. Insbesondere die BHKW- Lösungen stellen jedoch oft Insellösungen dar, da ein Bezug von elektrischer Energie aus einer anderen Spannungsquelle oder eine Einspeisung in eine andere Spannungsquelle nicht vorgesehen ist. Bei dem Betrieb von BHKWs gibt es verschiedene Betriebsweisen, wobei sich insbesondere strom- oder wärmegeführte Betriebsweisen durchgesetzt haben.

Bei der stromgeführten Betriebsweise wird das BHKW in der Regel dann betrieben, wenn eine elektrische Leistung von einem oder mehreren Verbrauchern bezogen wird. Bei der wärmegeführten Betriebsweise hingegen wird das BHKW abhängig von einem Wärmebedarf eines Verbrauchers oder eines Haushaltes betrieben. Die elektrische Energie wird in der Regel, sofern diese nicht vollständig parallel von einem Verbraucher bezogen wird, in einem Energiespeicher gespeichert. Ein solcher Energiespeicher, meist ein Akkumulator, kann eine Gleichspannungsquelle, im Sinne der Erfindung darstellen.

Andere Gleichspannungsquellen können zum Beispiel Batterien und/oder Kondensatoren und/oder Photovoltaik-Anlagen sein. Die Leistungsversorgung eines Verbrauchers aus einer Gleichspannungsquelle ist ebenfalls bekannt.

Die bekannten Verfahren und Vorrichtungen zur Versorgung eines Verbrauchers sind aber ungeeignet oder zumindest unpraktisch, da insbesondere kein Verbraucher abhängig von Daten und/oder mindestens einem Leistungsbezugparameter von einer Wechselspannungsquelle und/oder Gleichspannungsquelle versorgt wird. Auch sind keine Verfahren zur steuerbaren Versorgung mindestens eines Verbrauchers mit elektrischer Energie bekannt.

Der vorliegenden Erfindung liegt die Aufgabe zugrunde, ein verbessertes Verfahren und ein besonders effizientes Verfahren zur Versorgung mindestens eines Verbrauchers mir elektrische Energie zu schaffen. Eine Aufgabe kann die Bereitstellung eines verbesserten Verfahrens und/oder eines besonders effizienten Verfahrens zur Versorgung mindestens eines Verbrauchers mit elektrischer Energie und/oder aus mehreren Leistungsquellen sein.

Eine weitere erfindungsgemäße Aufgabe kann es sein, eine verbesserte Steuerung für eine schaltbare, elektrisch leitende Leitungsverbindungen zu schaffen. Eine solche Leitungsverbindung soll, insbesondere über einen Schalter, so herstellt werden, dass ein Versorger durch vorgebbare Daten und/oder abhängig von Leistungsparametern mit einer der Spannungsquellen verbunden wird.

Eine weitere Aufgabe kann es sein, mindestens einen Verbraucher sicher und zuverlässig mit einer der Spannungsquellen über eine schaltbare, elektrisch leitende Leitungsverbindung zu verbinden. Bevorzugt und/oder insbesondere wenn dieses auf Grund von Leistungsparametern vorteilhaft ist, soll eine Verbindung mit der Gleichspannungsquelle hergestellt werden. So kann es auch eine erfindungsgemäße Aufgabe sein, den Leistungsbezug aus einer Wechselspannungsquelle, insbesondere aus einem öffentlichem Versorgungsnetz, vorzugsweise ein Niederspannungsnetz, zu minimieren.

Eine andere Aufgabe kann es sein, den mindestens einen Verbraucher mit elektrischer Energie aus mindestens einer der Spannungsquelle zu versorgen, wobei die Steuerung eine schaltbare, elektrisch leitende Leitungsverbindung zwischen dem mindestens einen Verbraucher und einer der Spannungsquellen herstellt, die verfügbar ist und/oder, insbesondere auf Grund von Leistungsbezugsparametem, besonders vorteilhaft ist. So kann es auch eine weitere Aufgabe sein, den mindestens einen Verbraucher mit elektrischer Energie zu versorgen, falls eine der Spannungsquellen, insbesondere eine Wechselspannungsquelle ausfällt und/oder nicht betrieben wird. Eine weitere Aufgabe ist es, ein verbessertes Notstromaggregat zur Verfügung zu stellen.

Die erfindungsgemäße Aufgabe wird von einem Verfahren zur Versorgung mindestens eines Verbrauchers mit elektrischer Energie mit den Merkmalen des Anspruchs 1 gelöst oder nach einer Vorrichtung nach Anspruch 19. Bevorzugte Ausgestaltungen sind in den Unteransprüchen angegeben.

Erfindungsgemäß ist ein Verfahren für die netzparallele Versorgung, insbesondere an einem Niederspannungsnetz, mindestens eines Verbrauchers mit elektrischer Energie, das in einer elektrischen Anlage ausgeführt wird, die mindestens aufweist eine elektrische Gleichspannungsquelle, einen Wechselrichter, insbesondere einen bidirektionalen Wechselrichter, eine Messvorrichtung, insbesondere einen Leistungszähler die eine elektrische Leistung des mindestens einen Verbrauchers misst, eine elektrische Wechselspannungsquelle und ein Steuerelement das mindestens eine Auswerteeinheit aufweist, die Messdaten der mindestens einen Messvorrichtung analysiert, ob die Verbraucherleistung größer als die von der Gleichspannungsquelle verfügbare Leistung ist, und dass das Steuerelement, wenn diese Bedingung erfüllt ist, eine elektrisch leitende Verbindung (Leitungsverbindung), insbesondere mittels eines Schalters zwischen zumindest der Wechselspannungsquelle und dem mindestens einem Verbraucher herstellt dadurch gekennzeichnet, dass Daten der Messvorrichtung an einen Empfänger einer übergeordneten Steuerungszentrale übertragen werden und das dass Steuerelement Daten von der übergeordneten Steuerungszentrale empfängt, die mindestens eine der Spannungsquellen vorgeben, und ein Einspeisen von elektrischer Energie in die Gleichspannungsquelle und/oder der Wechselspannungsquelle steuert.

Erfindungsgemäß kann auch ein Verfahren für die Versorgung mindestens eines Verbrauchers mit elektrischer Energie sein, das in einer elektrischen Anlage ausgeführt wird, die mindestens aufweist: eine elektrische Gleichspannungsquelle, einen Wechselrichter, insbesondere einen bidirektionalen Wechselrichter, eine elektrische Wechselspannungsquelle und ein Steuerelement, dadurch gekennzeichnet, dass das Steuerelement zwischen mindestens einer der Spannungsquellen und mindestens einem der Verbraucher eine schaltbare, elektrisch leitende Leitungsverbindung herstellt, so dass aus der elektrischen Gleichspannungsquelle über den Wechselrichter gespeist wird, wenn dieses, insbesondere durch Daten, vorzugsweise durch mindestens einen Leistungsbezugsparameter, vorgegeben ist, und/oder wenn die Verbraucherleistung kleiner oder gleich der von der Gleichspannungsquelle verfügbaren Leistung ist, oder zumindest teilweise aus der elektrischen Gleichspannungsquelle über den Wechselrichter gespeist wird, wenn die Verbraucherleistung größer als die von der Gleichspannungsquelle verfügbaren Leistung und/oder aus der elektrischen Wechselspannungsquelle gespeist wird, wenn dieses, insbesondere durch Daten, vorzugsweise durch mindestens einen Leistungsbezugsparameter, vorgegeben ist, und/oder wenn die Verbraucherleistung größer der von der Gleichspannungsquelle verfügbaren Leistung ist.

Erfindungsgemäß kann es sein, dass mindestens eine der Spannungsquellen der elektrischen Anlage den mindestens eine Verbraucher, vorzugsweise einen Verbraucherverbund, beispielsweise in einem Haushalt, mit elektrischer Energie versorgt.

Als Spannungsquellen wird eine Vorrichtung bezeichnet, die eine elektrische Spannung erzeugt und/oder einen Ausgang mit einer bestimmten Spannung aufweist.

Eine Wechselspannungsquelle der elektrischen Anlage, in der das erfindungsgemäße Verfahren durchgeführt wird, kann ein BHKW, insbesondere mit einem Scheibengenerator, und/oder ein Windenergieantage, insbesondere mit einem Scheibengenerator, und/oder öffentliches Stromnetz sein. Das BHKW und/oder die Windenergieanlage können besonders vorteilhaft einen Schelbengenerator, vorzugsweise einen Synchrongenerator in kurzer Baulänge, aufweisen, der eine, insbesondere hochfrequente, Wechselspannung erzeugt, vorzugsweise eine Wechselspannung von 50 Hertz.

Es können aber auch andere alternative Wechselspannungsquellen in der elektrischen Anlage zum Einsatz kommen.

Die Gleichspannungsquelle der elektrischen Anlage kann insbesondere eine Batterie und/oder ein Akkumulator und/oder Solarzellen und/ oder ein Photovoltaik-Element sein. Besonders bevorzugt ist jedoch die Verwendung eines Akkumulators, insbesondere eines Lithium-Titanat oder eines Lithium-Eisen-Phosphat Akkumulators. Alternativ oder ergänzend sind aber auch andere Akkumulatoren, vorzugsweise Lithium-, Nickel- und/oder Bleihaltige Akkumulatoren denkbar. Auch kann die Verwendung eines Kondensators als Energiespeichers in der elektrischen Anlage erfindungsgemäß sein. Auch können mehrere Energiespeicher in der elektrischen Anlage enthalten sein. In einer alternativen Ausgestaltung kann ein Energiespeicher, insbesondere Akkumulator, eine Vielzahl von Modulen und/oder Zellen, insbesondere auch unterschiedliche Zelltypen, aufweisen. Besonders bevorzugt könnten dabei mehrere Module und/oder Zellen eines Energiespeichers in Reihe und/oder parallel geschaltet sein. Der Energiespeicher kann in einer bevorzugten Ausgestaltung einen Wärmetauscher aufweisen. Über diesen Wärmetauscher kann Wärmeenergie an einen, insbesondere fluiden, Wärmeträger, vorzugsweise Wasser übertragen werden. Der übertragende Wärmeenergie kann bevorzugt in einem Wärmespeicher gespeichert werden und/oder vorzugsweise für Heizungszwecke, beispielsweise in einer Fußbodenheizung, verwendet werden.

In einer besonders bevorzugten Ausgestaltung kann der Energiespeicher eine modulare Bauweise aufweisen.

Die erfindungsgemäßen Module des modularen Energiespeichers können so ausgestaltet sein, dass ein Modul, insbesondere jedes Modul, nicht schwerer als 200 kg, Insbesondere nicht schwerer als 150 kg, vorzugsweise nicht schwerer als 100 kg, ist undloder dass der Standplatzbedarf des modularen Energiespeichers, kleiner als 2 m², insbesondere kleiner als 1 m², vorzugsweise kleiner als 0,5 m² ist. Vorzugsweise können die erfindungsgemäßen Module so angeordnet werden, dass die Module übereinander positioniert und/oder ineinanderfassend einen gemeinsamen Energiespeicher bilden können. Vorzugsweise können die Schnittstellen des Energiespeichers derart angepasst sein, dass die Module nicht schwerer als ein vorgegebenes Gewicht, insbesondere nicht schwerer als 150 kg und/oder die Grundfläche nicht größer als eine vorgegebene Fläche, insbesondere nicht größer als 1 m², vorzugsweise kleiner als 0,5 m² sind. Des Weiteren können die Schnittstellen des Energiespeichers so ausgebildet sein, dass komplementäre Verbindungselemente sich im Wesentlichen gegenüberliegen und ineinander fassen und/oder durch Verlängerungselemente verbindbar, insbesondere schnellverbindbar sind. Besonders bevorzugt können dabei mehrere Module und/oder Zellen eines Energiespeichers in Reihe geschaltet sein.

Die elektrische Anlage in der das erfindungsgemäße Verfahren ausgeführt wird kann insbesondere zwei Wechselrichter, vorzugsweise zwei bidirektionale Wechselrichter, enthalten, wobei ein erster Wechselrichter zwischen dem mindestens einem Verbraucher und der Gleichspannungsquelle und ein zweiter Wechselrichter zwischen der Gleichspannungsquelle und einem BHKW, insbesondere einem BHKW mit Scheibengenerator, geschaltet sein kann.

Die Gleichspannungsquelle der elektrischen Anlage kann insbesondere eine Batterie und/oder ein Akkumulator und/oder Solarzellen sein. In einer anderen Ausgestaltungsform kann die Gleichspannungsquelle auch in einem Elektrofahrzeug, insbesondere einem Elektroautomobil, einem Elektrokraftrad, einem Elektrowasserfahrzeug und/oder in jeder anderen Vorrichtung mit einem Energiespeicher enthalten sein. Für eine besonders bevorzugte Ausführungsform kann ein Elektrofahrzeug, insbesondere mit einem Energiespeicher, eine erfindungsgemäße Gleichspannungsquelle darstellen. Dass heißt auch, dass ein Elektrofahrzeug Teil der elektrischen Anlage sein kann. Die Gleichspannungsquelle, insbesondere der Energiespeicher, vorzugsweise der Energiespeicher eines Elektrofahrzeuges, kann die, insbesondere gespeicherte, elektrische Energie an die erfindungsgemäße Anlage übertragen und/oder in eine andere Spannungsquelle, insbesondere eine Wechselspannungsquelle, vorzugsweise in ein öffentliches Versorgungsnetz, speisen. Die Gleichspannungsquelle, vorzugsweise eine in einem Elektrofahrzeug enthaltende und/oder ein Elektrofahrzeug einen Energiespeicher aufweisend, kann also elektrische Energie an eine andere Spannungsquelle, vorzugsweise, beispielsweise auch über einen Wechselrichter, an eine Wechselspannungsquelle, insbesondere an eine Versorgungsnetz, übertragen und/oder elektrische Energie aus einer anderen Spannungsquelle übertragen bekommen. Des Weiteren kann es erfindungsgemäß sein, dass ein Elektrofahrzeug, zu Zeiten, in denen es beispielsweise parkt, nicht bewegt und/oder nicht betrieben wird, an eine elektrische Anlage angeschlossen wird und die, insbesondere gespeicherte, elektrische Energie und/oder die Kapazität des Energiespeichers des Elektrofahrzeugs dieser Anlage zur Verfügung stellt. Besonders vorzugsweise kann dabei der Benutzer eines Elektrofahrzeuges vorgeben, beispielsweise wann er das Elektrofahrzeug, insbesondere mit welchem Ladungszustand des Energiespeichers, wünscht. Die Steuerung und/oder die Steuerungszentrale der elektrischen Anlage kann in der Zwischenzeit, insbesondere wenn das Elektrofahrzeug nicht betrieben wird, nicht bewegt wird und/oder parkt, die Kapazität des Energiespeichers und/oder die gespeicherter Energie in dem Energiespeicher nutzen und/oder in der elektrischen Anlage zur Verfügung stellen. Der Energiespeicher des Elektrofahrzeugs kann als eine erfindungsgemäße Gleichspannungsquelle verwendet werden. Dass heißt auch, dass die Steuerung Leitungsverbindungen zu dem, insbesondere in einem Elektrofahrzeug enthaltenen, Energiespeicher herstellen und/oder steuern kann.

Besonders bevorzugt ist jedoch die Verwendung eines Akkumulators, insbesondere eines Lithium-Eisen-Phosphat Akkumulators. Alternativ oder ergänzend sind aber auch andere Akkumulatoren, vorzugsweise L'tthium-, Nickel- und/oder Blei-haltige Akkumulatoren denkbar. Auch kann die Verwendung eines Kondensators als Energiespeichers in der elektrischen Anlage erfindungsgemäß sein. In einer besonders bevorzugten Ausgestaltung kann die elektrische Anlage einen elektrischen Energiespeicher, insbesondere eine Akkumulator, und einen Kondensator aufweisen. Der Kondensator kann, vorzugsweise beim Erreichen oder Überschreiten eines Schwellwertes, insbesondere für den Leistungsbezug des mindestens einen Verbrauchers, insbesondere vorher im Kondensator gespeicherte, elektrische Energie an die elektrische Anlage abgegeben werden.

Die mindestens eine Glelchspannungsquelle kann über einen Wechselrichter, insbesondere einen bidirektionalen Wechselrichter, mit der mindestens einen Wechselspannungsquelle verbunden sein. So kann beispielsweise elektrische Energie von der einen Spannungsquelle, beispielsweise von einer Wechselspannungsquelle, in eine andere Spannungsquelle, beispielsweise in eine andere Wechselspannungsquelle und/oder über mindesten einen Wechselrichter In eine Gleichspannungsquelle, gespeist werden.

Besonders vorteilhaft kann es sein, dass die Wechselspannungsquelle mindestens ein BHKW aufweist. Erfindungsgemäß kann es dabei sein, dass elektrische Energie aus der Wechselspannungsquelle, insbesondere aus einem BHKW und/oder einer Windenergie-Anlage und/oder einer Photovoltaik-Anlage und/oder einem öffentlichen Stromnetz, über einen Wechselrichter, in die Gleichspannungsquelle, vorzugsweise in einen Energiespeicher, gespeist wird. Dadurch kann die Gleichspannungsquelle, insbesondere der mindestens eine Energiespeicher, vorzugsweise ein Akkumulator, mit elektrischer Energie aufgeladen werden. Besonders vorteilhaft kann dabei der Energiespeicher vollständig mit elektrischer Energie aus einem BHKW und/oder einer Windenergie-Anlage und/oder einer Photovoltaik-Anlage geladen werden.

Erfindungsgemäß kann es aber auch sein, dass elektrische Energie aus einer Gleichspannungsquelle über einen Wechselrichter, insbesondere einem bidirektionalen Wechselrichter, in eine Wechselspannungsquelle oder in ein Wechselspannungsnetz eingespeist wird.

Erfindungsgemäß ist es, dass das Steuerelement zwischen mindestens einer der Spannungsquellen und mindestens einem der Verbraucher eine schaltbare, elektrisch leitende Leitungsverbindung herstellt, so dass aus der elektrischen Gleichspannungsquelle über den Wechselrichter gespeist wird, wenn dieses, insbesondere durch Daten, vorzugsweise durch mindestens einen Leistungsbezugsparameter, vorgegeben ist, und/oder wenn die Verbraucherleistung kleiner oder gleich der von der Gleichspannungsquelle verfügbaren Leistung ist, oder zu mindest teilweise aus der elektrischen Gleichspannungsquelle über den Wechselrichter gespeist wird, wenn die Verbraucherleistung größer als die von der Gleichspannungsquelle verfügbaren Leistung und/oder aus der elektrischen Wechselspannungsquelle gespeist wird, wenn dieses, insbesondere durch Daten, vorzugsweise durch mindestens einen Leistungsbezugsparameter, vorgegeben ist, und/oder wenn die Verbraucherleistung größer der von der Gleichspannungsquelle verfügbaren Leistung ist.

Das Steuerelement kann dabei, insbesondere durch die Steuerung einen Schalters, die Herstellung eines Kontaktes, vorzugsweise eines Schaltkontaktes einer elektrisch leitenden Verbindung, steuern. Erfindungsgemäß ist ein Verfahren zur Versorgung mindestens eines Verbrauchers, vorzugsweise eines Verbraucherverbundes, mit elektrischer Energie, das in einer elektrischen Anlage ausgeführt wird, vorzugsweise in einer elektrischen Haushaltsanlage, die des Weiteren gekennzeichnet ist durch die Merkmale des Hauptanspruchs. Ein Verbraucherverbund kann dabei aus einer Vielzahl von Verbrauchern bestehen. Diese Verbraucher können dabei insbesondere parallel und/oder in Serie über elektrische leitende Leitungsverbindungen verbunden sein.

Das Steuerelement kann eine schaltbare, elektrisch leitende Leistungsverbindung zwischen dem mindestens einen Verbraucher und einer der Spannungsquellen, bevorzugt durch die Steuerung eines Schaltelements, insbesondere eines elektrischen Schalters, herstellen. Eine solche Leitungsverbindung zwischen beispielsweise der mindestens einen Gleichspannungsquelle und dem mindestens einem Verbraucher kann insbesondere gesteuert werden, wenn Daten und/oder wenn mindestens ein Leistungsbezugparameter eine solche Leitungsverbindung vorgeben. Die Leistungsbezugsparameter können Parameter des mindestens einen Verbrauchers und/oder Parameter, die gekennzeichnet sind durch die Zeit, insbesondere Tageszeit und/oder Uhrzeit, und/oder Zustände, Insbesondere Betriebzustände, beispielsweise eines BHKWs und/oder einer Windenergieanlage und/oder einer Photovoltaikanlage und/oder einer alternativen Spannungsquelle, insbesondere Wechselspannungsquelle, sein. Als Leistungsbezugsparameter können auch durchschnittliche und/oder hochgerechnete Energiebezugsdaten des mindestens einen Verbrauchers, insbesondere unter Berücksichtigung eines zeitlichen Verlaufs über den Tag, als Daten angesehen werden und vorzugsweise die Steuerung des Steuerelements und/oder Schaltung und/oder Herstellung der elektrisch leitenden Leitungsverbindung vorgeben. Auch kann, insbesondere vorgegeben durch empfangbar Daten, das Steuerelement eine entsprechende schaltbare Leitungsverbindung herstellen und/oder ändern.

Als Leistungsbezugparameter könnten auch Preise, insbesondere Strompreise oder Leistungsbezugspreise, wie Netzentgelte und/oder andere Abgaben, einen Einfluss auf das Steuerelement und/oder die schaltbare Leitungsverbindung haben.

Erfindungsgemäß kann es sein, dass das Steuerelement eine schaltbare, elektrisch leitende Verbindung zwischen dem Verbraucher und mindestens einer der Spannungsquellen herstellt, wenn Daten, insbesondere gespeicherte und/oder empfangenden Daten, mindestens eine der Spannungsquellen, insbesondere eine Wechselspannungsquelle oder eine Gleichspannungsquelle, vorgegeben. Diese Daten können auch Fahrpläne für das BHKW und/oder Schaltpläne für das Steuerelement übertragen und/oder vorgeben, insbesondere zu welcher Zeit aus welcher Spannungsquelle gespeist werden soll und/oder insbesondere auch zu welcher Zeit elektrische Energie von der einen Spannungsquelle, vorzugsweise von einer Wechselspannungsquelle, in eine andere Spannungsquelle, vorzugsweise in eine Gleichspannungsquelle, übertragen werden soll;

Die elektrische Anlage in der das erfindungsgemäße Verfahren durchgeführt werden kann, kann eine Messvorrichtung enthalten, insbesondere einen Leistungszähler, vorzugsweise einen intelligenten Zähler (Smart Meter). Ein solcher Zähler kann insbesondere die Leistung des mindestens einen Verbrauchers messen und/oder den jeweils aktuellen Bezug von elektrischer Leistung und/oder einen Verlauf des Leistungsbezugs über eine, insbesondere zeitliche, Periode darstellen. Auch kann eine solche Messvorrichtung, insbesondere die von der Messvorrichtung generierten, Daten speichern. Ein intelligenter Zähler kann mit zusätzlichen Funktionen ausgestattet sein. Die Zählerdaten können, beispielsweise über ein Funknetz und/oder Mobiltelefonnetz und/oder Internet, insbesondere an eine Steuerungszentrale und/oder an das Steuerungselement der elektrischen Anlage, übertragen werden. Neben dem Bedarf an elektrischer Energie kann die Messvorrichtung, insbesondere ein intelligenter Zähler, auch Lastspitzen des mindestens einen Verbrauchers und/oder Verbraucherverbundes messen und insbesondere zu Zeiten solcher Lastspitzen Daten speichern und/oder senden, insbesondere an eine Steuerungszentrale und/oder an das Steuerungselement der elektrischen Anlage. Die Lastspitzen können von der Messvorrichtung und/oder der Steuereinheit und/oder einer Steuerzentrale, insbesondere durch einen Abgleich mit Schwellwerten und/oder durchschnittlichen Leistungsbezugswerten, erkannt werden. Die Steuereinheit kann zu Zeiten solcher Lastspitzen eine elektrische Leitungsverbindung zu mindestens einer der Spannungsquellen, insbesondere über mindestens einen Schalter, herstellen und so eine vorteilhafte Versorgung des Verbrauchers, beispielsweise aus einer Gleichspannungsquelle, steuern.

Auch kann in einer alternativen Ausführungsform die Messvorrichtung Daten empfangen und/oder Daten übertragen. Eine solche Datenübertragung kann vorzugsweise drahtlos sein. Die Daten können in einer alternativen Ausführungsform über eine Datenleitung an einen Empfänger übertragen werden. Vorzugsweise kann der Empfänger der Daten ein erfindungsgemäßes Steuerelement und/oder eine Steuerzentrale, insbesondere des Betreibers der elektrischen Anlage, sein. Die Daten der Messvorrichtungen können auch gespeichert werden und/oder in, insbesondere periodischen, Zeitabständen an einen Empfänger gesendet werden. Ein vorteilhafter Empfänger kann beispielsweise auch eine zentrale Steuerungseinheit und/oder eine, insbesondere übergeordneten Steuerungszentrale, vorzugsweise des Betreibers der elektrischen Anlage und/oder des Betreibers des erfindungsgemäßen Verfahrens, sein.

In einer solchen Steuerungszentrale können die Daten von einer Vielzahl von elektrischen Anlagen empfangen und/oder, insbesondere gemeinsam, verarbeitet werden. So kann es auch erfindungsgemäß sein, dass im Wesentlichen gleichzeitig ablaufende erfindungsgemäße Verfahren beispielsweise in einer Vielzahl von elektrischen Anlagen durch eine zentrale Steuerungseinheit, insbesondere eine Steuerungszentrale, vorzugsweise beim Betreiber der elektrischen Anlagen, gesteuert werden. Besonders vorteilhaft könnte daher das Durchführen des erfindungsgemäßen Verfahrens in einer Vielzahl von elektrischen Anlagen sein. Dadurch könnte die Aufgabe gelöst werden, insbesondere zu bestimmbaren Zeiten oder in vorgegebenen Zeiträumen, elektrische Energie in ein, vorzugsweise die Vielzahl elektrischer Anlagen verbindendes, System, beispielsweise ein Versorgungsnetz, einzuspeisen. So könnte beispielsweise elektrischen Leistungsspitzen durch eine, insbesondere gezielte, Einspeisung entgegengewirkt werden. Besonders vorteilhaft könnte auch elektrische Energie einer elektrischen Anlage oder eines Anlagenverbunds, in der oder in dem ein erfindungsgemäßen Verfahren durchgeführt wird, in beispielsweise eine Wechselspannungsquelle, vorzugsweise im Wesentlichen gleichzeitig, übertragen und/oder eingespeist werden. Eine solche Einspeisung könnte insbesondere zu Zeiten durchgeführt werden, in denen Leistungsspitzen im System, beispielsweise in einem Versorgungsnetz, vorliegen und/oder elektrische Energie von mindestens einem Verbraucher oder Verbraucherverbunds abgefragt wird und/oder sich ein vergleichsweise hoher Preis für elektrische Energie erzielen lässt.

Ein erfindungsgemäßes Steuerungselement kann in einer bevorzugten Ausführungsform Daten, insbesondere von einer Messvorrichtung und/oder einer Steuerungszentrale, empfangen und/oder speichern. Das Steuerungselement steuert, insbesondere unter Berücksichtigung dieser Daten, die Herstellung einer elektrisch leitenden Leitungsverbindung. Die, insbesondere empfangenden, Daten können mindestens eine der Spannungsquellen, zu der eine schaltbare, elektrisch leitende Leitungsverbindung hergestellt werden soll, vorgeben. Auch kann es in einer bevorzugten Ausführungsform des erfindungsgemäßen Verfahrens vorteilhaft sein, wenn eine Vorrichtung zur Datenverarbeitung, insbesondere eine Recheneinheit, die, insbesondere empfangenden, Daten vor der Übermittlung an das Steuerelement verarbeitet.

Die schaltbare, elektrisch leitende Leitungsverbindung kann insbesondere zwischen dem mindestens einem Verbraucher und insbesondere einer der Spannungsquellen hergestellt werden. In einer anderen Ausführungsform kann es vorteilhaft sein, dass eine Leitungsverbindung, insbesondere mit mindestens einem Wechselrichter, zu einer Wechselspannungsquelle und zu einer Gleichspannungsquelle hergestellt wird.

In einer bevorzugen Ausführungsform des Verfahrens kann das Steuerelement eine Einspeisung von elektrischer Energie in die Gleichspannungsquelle und/oder in die Wechselspannungsquelle steuern. Das Steuerelement kann beispielweise eine schaltbare, elektrisch leitende Leitungsverbindung herstellen, so dass elektrische Energie von einer Wechselspannungsquelle über einen Wechselrichter, insbesondere einen bidirektionalen Wechselrichter, in einen elektrischen Energiespeicher, insbesondere in eine Gleichspannungsquelle übertragen werden kann. Ebenso kann in einer alternativen Durchführung des erfindungsgemäßen Verfahrens elektrische Energie von einer Gleichspannungsquelle, über mindestens einen Wechselrichter, insbesondere einen bidirektionalen Wechselrichter, elektrische Energie in einen Wechselspannungssystem, insbesondere in ein Versorgungsnetz, eingespeist werden.

Erfindungsgemäß ist vorzugsweise auch die elektrische Anlage in der das Verfahren zur Versorgung des mindestens einen Verbrauchers durchgeführt wird, als Notstromaggregat. So kann es vorteilhaft sein, dass, sobald eine der Spannungsquellen, die Versorgung der nachgefragten elektrischen Energie des Verbraucher nicht decken kann, beispielsweise eine Wechselspannungsquelle, insbesondere das öffentliche Stromnetz, die elektrische Energie zunächst aus der Gleichspannungsquelle, insbesondere einem Energiespeicher gespeist wird, bevor beispielsweise ein BHKW oder ein anderes Notstromaggregat betrieben wird. Insbesondere kann dadurch auch gewährleistet werden, dass eine nahezu lückenlose Versorgung mit elektrischer Energie gewährleistet wird. Diese nahezu lückenlose Versorgung stellt bei den Notstromsystemen des Standes der Technik häufig ein Problem dar, weil herkömmliche Notstromaggregate, meist Verbrennungsmotoren, eine Anlaufzeit haben, zu der noch keine elektrische Energie abgegeben werden kann. Das erfindungsgemäße Notstromaggregat kann eine solche Anlaufzeit oder bei nur kurze Abschaltzeiten der vorher versorgenden Wechselspannungsquelle überbrücken. Insbesondere kann bei nur kurzen Abschaltzeiten eine der Spannungsquellen, ein vergleichsweise aufwendiger Start eines Notstromaggregats vermieden werden.

Diese und weitere Merkmale und Vorteile der vorliegenden Erfindung werden mit Bezug auf die beigefügten Zeichnungen von Ausführungsbeispielen der vorliegenden Erfindung weiter beschrieben. In den Zeichnungen zeigen:
**Figur 1** eine elektrische Anlage, in der das erfindungsgemäße Verfahren ausgeführt werden kann,
**Figur 2** eine alternative Ausführungsform der elektrischen Anlage,
**Figur 3** eine weiter alternative Ausführungsform der elektrischen Anlage,
**Figur 4** eine bevorzugte Ausführungsform der elektrischen Anlage und
**Figur 5** eine weitere bevorzugte Ausführungsform der elektrischen Anlage.

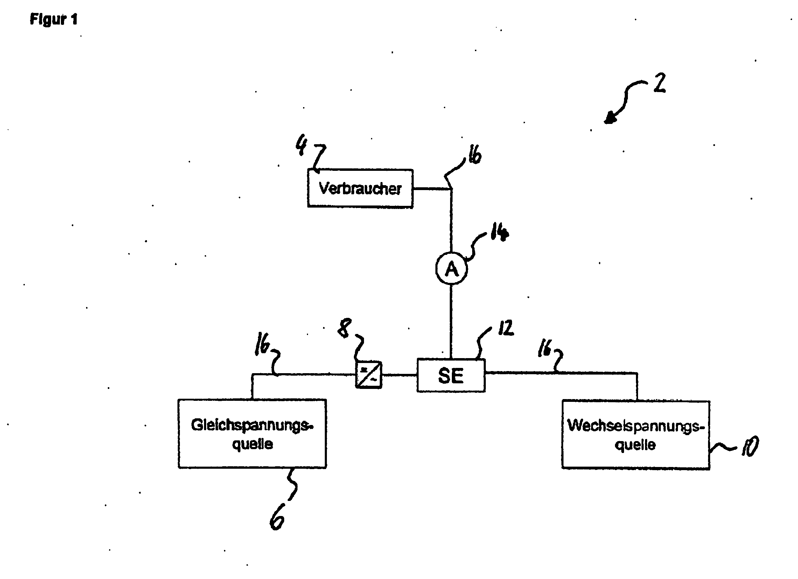

**Figur 1** zeigt eine elektrische Anlage **2,** in der das erfindungsgemäße Verfahren durchgeführt werden kann. Die elektrische Anlage **2** weist dabei mindestens einen Verbraucher **4,** eine elektrische Gleichspannungsquelle **6,** einen Wechselrichter **8,** insbesondere einen bidirektionalen Wechselrichter, eine elektrische Wechselspannungsquelle **10** und ein Steuerelement **12** auf. Des Weiteren ist in der elektrischen Anlage eine Messvorrichtung **14** zwischen den Spannungsquellen **6, 10** und dem elektrischen Verbraucher **4** geschaltet. Die Messvorrichtung **A** kann dabei den Bedarf der elektrischen Leistung des mindestens einen Verbrauchers messen und Daten generieren, die die Messvorrichtung insbesondere speichern und/oder senden kann, insbesondere an eine, insbesondere außerhalb der elektrischen Anlage befindliche, Steuerungszentrale und/oder an das Steuerelement **SE** der elektrischen Anlage.

Die Steuerungszentrale (nicht dargestellt) und/oder das Steuerelement **12** können insbesondere diese empfangenden Daten verarbeiten und die elektrische Anlage **2** insbesondere abhängig von Leistungsbezugsparametem besonders vorteilhaft steuern. Das Steuerelement **12** kann dabei vorzugsweise mindestens einen Schalter steuern, der eine elektrisch leitende Leitungsverbindung **16** zu mindestens einer der Spannungsquellen **6, 10** herstellt. Die Wahl der Spannungsquelle kann vorzugsweise von den Daten, insbesondere von den Leistungsbezugsparametern abhängig sein. Eine Recheneinheit kann beispielsweise, insbesondere die von der Messvorrichtung **14** gemessenen, Werte, mit gespeicherten Daten vergleichen und/oder bei der Überschreitung von Schwellwerten, Daten an das Steuerelement **12** übertragen. Das Steuerelement **12** kann dann eine schaltbare elektrisch leitende Leitungsverbindung **16,** beispielsweise durch eine Steuerung eines Schalters, herstellen. Eine besonders vorteilhafte Steuerung kann sich insbesondere dadurch auszeichnen, dass der Bedarf an elektrischer Leistung, beispielsweise sobald ein Schwellwert überschritten wird, insbesondere zu Zeiten von Leistungsspitzen, vorteilhaft zumindest teilweise aus der Gleichspannungsquelle **6** gespeist werden kann. Durch die erfindungsgemäße Steuerung des Verfahrens kann eine Versorgung des mindestens einen Verbrauchers **4** mit elektrischer Energie aus der Wechselspannungsquelle **10,** insbesondere zu Zeiten zu denen ein Schwellwert überschritten wird, beispielsweise ein Schwellwert bezogen für einen Energiebezugspreis und/oder auf Netzentgelte, reduziert und/oder, insbesondere bei der Überschreitung von vorgegebenen Schwellwerten, vermieden werden. Schwellwerte können dabei auch Zeiten, insbesondere Tageszeiten und/oder Uhrzeiten, sein, dass heißt dass beispielsweise zu bestimmten Tageszeiten und/oder Uhrzeiten, eine Leitungsverbindung **16** zwischen dem Verbraucher **4** und zumindest im Wesentlichen nur einer der Spannungsquellen **6, 10,** vorzugsweise der Gleichspannungsquelle **6** oder der Wechselspannungsquelle **10,** hergestellt wird. Auch können so Zeiten überbrückt werden, an denen beispielsweise Wartungsarbeiten an der Wechselspannungsquelle **10** durchgeführt werden, und/oder die Wechselspannungsquelle **10** nicht verfügbar ist. Die Vorrichtung des erfindungsgemäßen Verfahrens kann daher auch den Verbraucher mit elektrischer Energie versorgen, wenn eine der Spannungsquellen **6, 10** ausfällt. Die erfindungsgemäße Vorrichtung des Verfahrens ist ein, im Vergleich zum Stand der Technik, verbessertes Notstromaggregat.

In einem weiteren Verfahrensablauf kann elektrische Energie über mindestens eine elektrisch leitende Leitungsverbindung **16,** insbesondere aus der Wechselspannungsquelle **10** über den mindestens einen, insbesondere bidirektionalen, Wechselrichter **8,** in die Gleichspannungsquelle **6,** insbesondere in einen Energiespeicher, gespeist werden. Dadurch kann der Energiespeicher, insbesondere ein Akkumulator und/oder ein Kondensator, mit elektrischer Energie aufgeladen werden. Eine solche Einspeisung von elektrischer Energie, insbesondere aus einer Wechselspannungsquelle **10,** vorzugsweise von einem öffentlichen Stromnetz und/oder von einem BHKW, insbesondere mit Scheibengenerator, in einen Energiespeicher kann insbesondere zu günstigen Zeiten durchgeführt werden, an denen mindestens ein Schwellwert, beispielsweise ein Schwellwert bezogen auf einen Energiebezugspreis und/oder auf Netzentgelte, unterschritten wird. Günstige Zeiten können dabei insbesondere Zeiten sein, zu denen beispielsweise das BHKW betrieben wird und/oder elektrische Energie aus einem, insbesondere öffentlichen, Versorgungsnetz verfügbar und/oder elektrische Energie, vorzugsweise preiswert, insbesondere verglichen mit einem Schwellwert für den Energiebezugspreis, verfügbar ist und/oder zu vorgegebenen Zeiten, insbesondere zu Nachtzeiten.

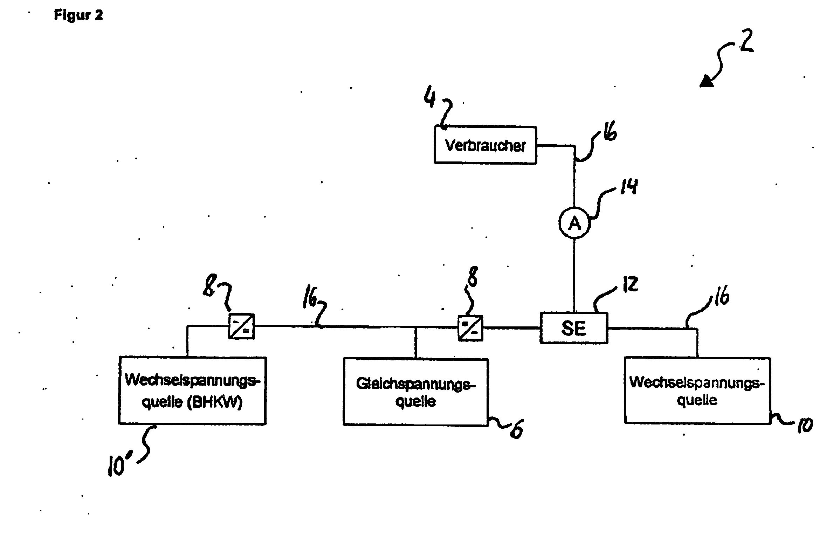

Die **Figur 2** zeigt eine elektrische Anlage **2,** die abweichend zur Figur 1 eine alternative Wechselspannungsquelle **10',** insbesondere ein BHKW, enthält. Die alternative Wechselspannungsquelle **10'** kann insbesondere ein BHKW sein, in einer alternativen Ausgestaltung kann aber auch eine andere Wechselspannungsquelle vorteilhaft sein.

Die Wechselspannungsquelle **10'** ist dabei über einen Wechselrichter **8,** insbesondere einen bidirektionalen Wechselrichter, mit der Gleichspannungsquelle **6,** insbesondere mit einem Energiespeicher, vorzugsweise mit einem Akkumulator verbunden. Die elektrische Energie kann über den mindestens einen Wechselrichter **8** von einer Spannungsquelle in eine andere der Spannungsquellen und/oder zu dem mindestens einen Verbraucher **4** übertragen werden. So kann es beispielsweise erfindungsgemäß sein, dass elektrische Energie von der einen Wechselspannungsquelle **10',** insbesondere von einem BHKW, vorzugsweise über mindestens einen Wechselrichter **8,** in die Gleichspannungsquelle **6,** vorzugsweise in einen Energiespeicher, und/oder, insbesondere über einen zweiten Wechselrichter **8,** in eine Wechselspannungsquelle **10,** insbesondere in ein öffentliches Versorgungsnetz, eingespeist werden.

Auch kann es vorteilhaft sein, dass elektrische Energie von der einen Wechselspannungsquelle **10,** insbesondere von einem öffentlichen Stromnetz, und/oder einer Gleichspannungsquelle **6** über mindestens einen Wechselrichter **8,** zu der anderen Wechselspannungsquelle **10',** insbesondere zum BHKW, übertragen wird. Diese so übertragene elektrische Energie kann beispielsweise zum Anlassen des BHKW genutzt werden.

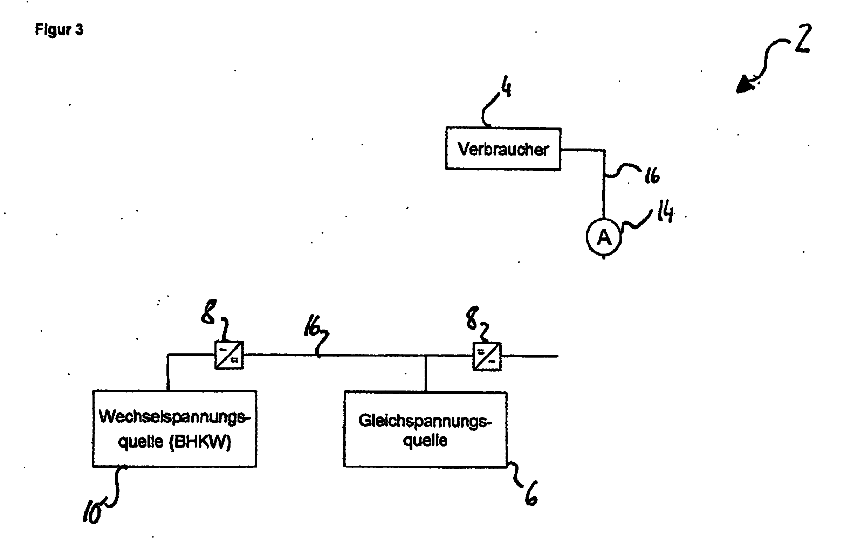

Die **Figur 3** zeigt eine elektrische Anlage **2,** die abweichend zur Figur 2 nur eine Wechselspannungsquelle **10',** insbesondere ein BHKW, enthält. Die Wechselspannungsquelle **10',** vorzugsweise ein BHKW, ist dabei Ober einen Wechselrichter **8,** insbesondere einen bidirektionalen Wechselrichter, mit der Gleichspannungsquelle **6,** insbesondere mit einem Energiespeicher, vorzugsweise mit einem Akkumulator, verbunden. Des Weiteren besteht eine elektrische Leitungsverbindung **16** mit mindestens einem Wechselrichter **8,** insbesondere bidirektionalen Wechselrichter, zu dem mindestens einen Verbraucher **4.** Die elektrische Leitungsverbindung **16** ist schaltbar und kann von dem mindestens einem Steuerelement **12** gesteuert werden. In der elektrischen Anlage **2** aus Figur 3 ist zusätzlich eine Messvorrichtung **14** zwischen dem mindestens einem Verbraucher 4 und dem Steuerelement **12** vorgesehen.

Die elektrische Energie kann bei dieser elektrischen Anlage 2 zur Versorgung des mindestens einen Verbrauchers beispielsweise aus der Wechselspannungsquelle 10', insbesondere dem BHKW, bezogen werden. Beispielsweise kann während des Betriebes des BHKW elektrische Energie, insbesondere eine Wechselspannung, über einen Wechselrichter **8** in eine Gleichspannung gewandelt werden. Diese Gleichspannung kann wiederum in einer Gleichspannungsquelle **6,** vorzugsweise einem Energiespeicher, insbesondere einem Akkumulator, gespeichert werden und/oder kann über einen, insbesondere zweiten, Wechselrichter **8** in eine Wechselspannung gerichtet werden, die zur Versorgung des mindestens einen Verbrauchers **4** geeignet ist.

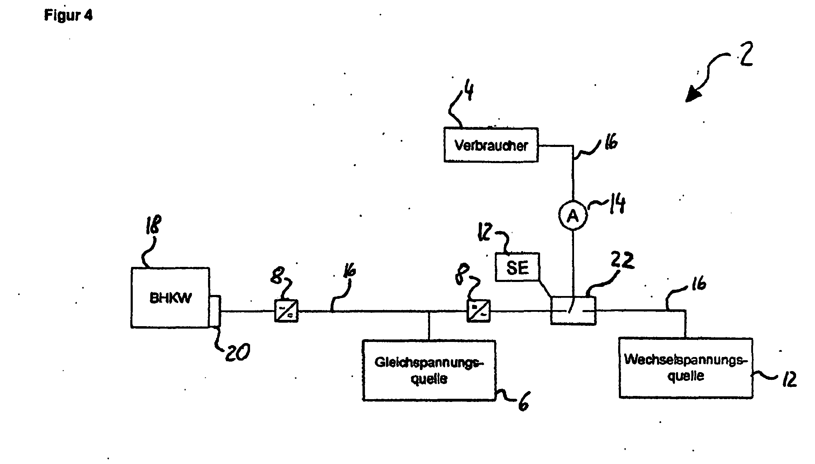

Die Figur **4** zeigt eine elektrische Anlage **2,** die vergleichbar mit Figur 2 eine ein BHKW **18** mit Scheibengenerator **20,** aufweist.

Die elektrische Energie kann bei dieser elektrischen Anlage **2** zur Versorgung des mindestens einen Verbrauchers **4** beispielsweise aus dem BHKW **18** mit Scheibengenerator **20,** bezogen werden. Beispielsweise kann während des Betriebes des BHKW **18** elektrische Energie, insbesondere eine Wechselspannung, über einen Wechselrichter 8 in eine Gleichspannung gewandelt werden. Diese Gleichspannung kann wiederum in einer Gleichspannungsquelle **6,** vorzugsweise einem Energiespeicher, insbesondere einem Akkumulator, gespeichert werden und/oder kann über einen, insbesondere zweiten, Wechselrichter **8** in eine Wechselspannung gerichtet werden, die zur Versorgung des mindestens einen Verbrauchers **4** und/oder zur Einspeisung von elektrischer Energie in eine Wechselspannungsquelle **10,** vorzugsweise in ein, insbesondere öffentliches, Versorgungsnetz, geeignet ist.

Bei dieser elektrischen Anlage **2** ist ein erfindungsgemäßes Steuerelement **12** vorgesehen, dass einen Schalter **22** steuert, der eine elektrische Leitungsverbindung **16** zwischen den Spannungsquellen **6, 10, 18** und/oder mindestens einer der Spannungsquellen **6, 10, 18** und dem Verbraucher **4** herstellt. In einer alternativen Ausführungsform kann die elektrische Anlage **2** auch eine Vielzahl von Schaltern **22** aufweisen, die jeweils zur Schaltung einer der Spannungsquellen **6, 10, 18** genutzt werden können. Das erfindungsgemäße Steuerelement **12** kann Daten, insbesondere von der mindestens einen Messvorrichtung **14** und/oder von einer Steuerungszentrale, empfangen und mit Hilfe der gemessenen Daten, des mindestens einen Leistungsparameter, und/oder vorgegebenen Daten die elektrische Anlage 2 steuern. Der mindestens eine Verbraucher **4** wird somit insbesondere unabhängig von nur einer Spannungsquelle **6, 10, 18** mit elektrischer Energie versorgt.

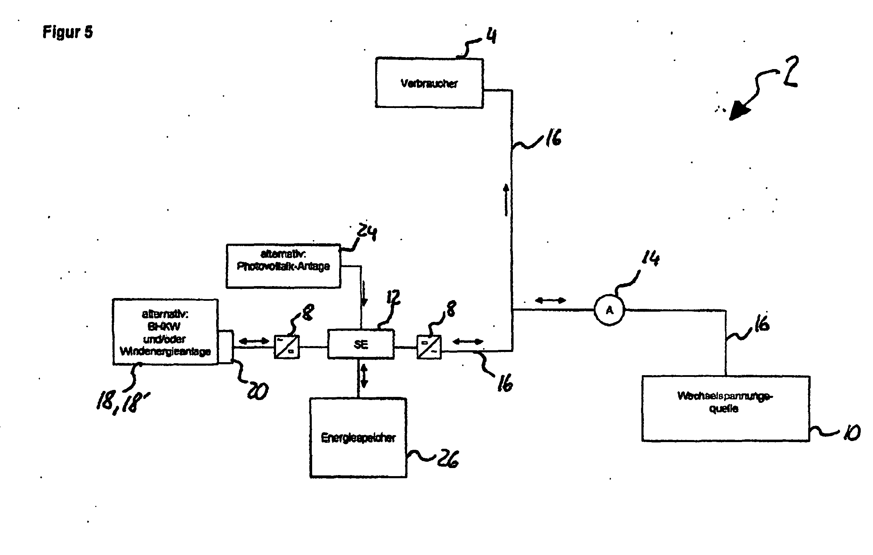

Die **Figur 5** zeigt eine bevorzugte elektrische Anlage **2** des erfindungsgemäßen Verfahrens. Bei dieser elektrischen Anlage **2** kann die Versorgung des mindestens einen Verbrauchers **4** aus verschiedenen Spannungsquellen **6, 10, 18, 18', 24** erfolgen. Die elektrische Anlage der Figur 5 enthält zumindest eine Wechselspannungsquelle **10,** die ein öffentliches Versorgungsnetz, insbesondere ein Niederspannungsnetz, darstellen kann. Des Weiteren weist die Anlage ein BHKW **18** und/oder eine Windenergieanlage **18'** auf, die vorzugsweise einen Scheibengenerator **20,** der eine Wechselspannung generiert, aufweisen können. Auch kann eine Photovoltaik-Anlage **24** als Gleichspannungsquelle enthalten sein. Eine weitere Gleichspannungsquelle im Sinne der Erfindung stellt ein Energiespeicher **26,** vorzugsweise ein Akkumulator, dar, der in einer alternativen Ausführungsform beispielsweise in einem Fahrzeug enthalten sein kann.

Die elektrische Energie kann auch bei dieser elektrischen Anlage 2 zur Versorgung des mindestens einen Verbrauchers 4 beispielsweise aus dem BHKW **18** und/oder der Windenergieanlage **18',** insbesondere jeweils mit einem Scheibengenerator **20,** bezogen werden. Beispielsweise kann während des Betriebes des BHKW **18** elektrische Energie, insbesondere eine Wechselspannung, über einen Wechselrichter **8** in eine Gleichspannung gewandelt werden. Diese Gleichspannung kann wiederum in einem Energiespeicher **26,** insbesondere einem Akkumulator, gespeichert werden und/oder kann über einen, insbesondere zweiten, Wechselrichter **8** in eine Wechselspannung gerichtet werden. Auch kann eine Photovoltaik-Anlage **24** eine Gleichspannung erzeugen, die, insbesondere über ein Wechselrichter **8,** für die zur Versorgung des mindestens einen Verbrauchers **4** und/oder zur Einspeisung von elektrischer Energie in eine Wechselspannungsquelle 10, vorzugsweise in ein, insbesondere öffentliches, Versorgungsnetz, geeignet ist. Ein erfindungsgemäßes Steuerelement **12,** insbesondere auch die erfindungsgemäße Messvorrichtung enthaltend, kann dabei die elektrische Verbindung zwischen mindestens einer Spannungsquelle **6, 10, 18, 18', 24** und dem mindestens einem Verbraucher **4** herstellen. Das erfindungsgemäße Steuerelement **12** kann dabei, insbesondere unter Berücksichtigung der Leistungsbezugsparameter und/oder der Messwerte der Messvorrichtung, beispielsweise über einen Schalter die Herstellung der Leitungsverbindungen steuern.

Des Weiteren enthält die elektrische Anlage eine Messvorrichtung **14,** die der einen Wechselspannungsquelle **10** nachgeschaltet ist und die einen Bezug und/oder die Einspeisung von elektrischer Leistung, insbesondere aus dieser Wechselspannungsquelle **10,** messen soll.

## Patentansprüche

1. Verfahren für die netzparallele Versorgung mindestens eines Verbrauchers (4) mit elektrischer Energie, das in einer elektrischen Anlage (2) ausgeführt wird, die mindestens aufweist: eine elektrische Gleichspannungsquelle (6), einen Wechselrichter (8), insbesondere einen bidirektionalen Wechselrichter, eine Messvorrichtung (14), insbesondere einen Leistungszähler, die eine elektrische Leistung des mindestens einen Verbrauchers (4) misst, eine elektrische Wechselspannungsquelle (10) und ein Steuerelement (12), das mindestens eine Auswerteeinheit aufweist, die Messdaten der mindestens einen Messvorrichtung (14) analysiert, ob die Verbraucherleistung größer als die von der Gleichspannungsquelle (6) verfügbare Leistung ist, und dass das Steuerelement (12), wenn diese Bedingung erfüllt ist, eine elektrisch leitende Verbindung (Leitungsverbindung)(16), insbesondere mittels eines Schalters, zwischen zumindest der Wechselspannungsquelle (10) und dem mindestens einem Verbraucher (4) herstellt, **dadurch gekennzeichnet, dass** Daten der Messvorrichtung (14) an einen Empfänger einer übergeordneten Steuerungszentrale übertragen werden und dass das Steuerelement (12) Daten von der übergeordneten Steuerungszentale empfängt, die mindestens eine der Spannungsquellen (6, 10, 18) vorgeben, und eine Einspeisung von elektrischer Energie in die Gleichspannungsquelle (6) und/oder in die Wechselspannungsquelle (10) steuert.

2. Verfahren nach Anspruch 1, **dadurch gekennzeichnet, dass** die Steuereinheit zwischen mindestens einer der Spannungsquellen (6, 10, 18) und mindestens einem der Verbraucher (4) schaltbar eine elektrisch leitende Leitungsverbindung (16) herstellt, so dass der mindestens eine Verbraucher (4) aus der elektrischen Gleichspannungsquelle (6) über den Wechselrichter (8) gespeist wird, wenn diese Verschaltung, insbesondere durch Daten, vorzugsweise durch mindestens einen Leistungsbezugsparameter, vorgegeben ist, und/oder wenn die Verbraucherleistung kleiner oder gleich der von der Gleichspannungsquelle (6) verfügbaren Leistung ist, oder zumindest teilweise aus der elektrischen Gleichspannungsquelle (6) über den Wechselrichter (8) gespeist wird, wenn die Verbraucherleistung größer ist als die von der Gleichspannungsquelle (6) verfügbare Leistung und/oder aus der elektrischen Wechselspannungsquelle (10) gespeist wird, wenn diese Verschaltung, insbesondere durch Daten, vorzugsweise durch mindestens einen Leistungsbezugsparameter, vorgegeben ist.

3. Verfahren nach Anspruch 1, **dadurch gekennzeichnet, dass** das Steuerelement (12) eine Einspeisung von elektrischer Energie in ein öffentliches Stromnetz steuert.

4. Verfahren nach einem der vorhergehenden Ansprüche **dadurch gekennzeichnet, dass** die Versorgung des mindestens einen Verbrauchers (4) eine netzparallele Versorgung an einem Niederspannungsnetz ist.

5. Verfahren nach einem der vorhergehenden Ansprüche **dadurch gekennzeichnet, dass** die elektrische Anlage (2) eine Messvorrichtung (14) einen Leistungszähler zur Messung einer elektrischen Leistung des mindestens einen Verbrauchers (4) aufweist.

6. Verfahren nach einem der vorhergehenden Ansprüche **dadurch gekennzeichnet, dass** die elektrischen Anlage (2), einen Transformator und/oder einen Hochsetzsteller (Aufwärtswandler) aufweist.

7. Verfahren nach einem der vorhergehenden Ansprüche **dadurch gekennzeichnet, dass** Daten der Messvorrichtung (14) über eine Datenleitung oder drahtlos an einen Empfänger übertragen werden.

8. Verfahren nach einem der vorhergehenden Ansprüche **dadurch gekennzeichnet, dass** die Steuereinheit Daten der Messvorrichtung (14) zu mindestens einem Leistungsbezugsparameter empfängt, die mindestens eine der Spannungsquellen (6, 10, 18) vorgeben.

9. Verfahren nach einem der vorhergehenden Ansprüche **dadurch gekennzeichnet, dass** das Steuerelement (12) zwischen der Gleichspannungsquelle (6) und dem mindestens einen Verbraucher (4) die schaltbare, elektrisch leitende Leitungsverbindung (16) herstellt, wenn die empfangenden Daten einen Leistungsbezug aus der Gleichspannungsquelle (6) vorgeben.

10. Verfahren nach einem der vorhergehenden Ansprüche **dadurch gekennzeichnet, dass** das Steuerelement (12) bidirektional eine elektrische Energieeinspeisung über einen bidirektionalen Wechselrichter (8) in die Gleichspannungsquelle (6) und/oder in Wechselspannungsquelle (10) steuert.

11. Verfahren nach einem der vorhergehenden Ansprüche **dadurch gekennzeichnet, dass** die elektrische Gleichspannungsquelle (6) einen Energiespeicher (26) aufweist.

12. Verfahren nach Anspruch 11 **dadurch gekennzeichnet, dass** der Energiespeicher (26) ein Akkumulator, ein Lithium-Ionen-Akkumulator, ein Lithium-Titanat-Akkumulator, ein Lithium-Eisen-Phosphat Akkumulator und/oder ein Blei- oder Nickel-haltiger Akkumulator ist.

13. Verfahren nach einem der Ansprüche 11 oder 12 **dadurch gekennzeichnet, dass** der Energiespeicher (26) einen Kondensator aufweist.

14. Verfahren nach einem der Ansprüche 11 - 13 **dadurch gekennzeichnet, dass** der Energiespeicher (26), insbesondere elektrische, Energie in einer Menge speichern kann, die insbesondere im Wesentlichen größer oder gleich der Menge ist, die einem täglichen Energiebedarf des mindestens einen Verbrauchers (4) entspricht.

15. Verfahren nach einem der Ansprüche 11 - 14 **dadurch gekennzeichnet, dass** an den mindestens einen Verbraucher (4) Leistung im Wesentlichen oder ausschließlich aus dem Energiespeicher (26), insbesondere aus dem Akkumulator, übertragen wird.

16. Verfahren nach einem der Ansprüche 11 -15 **dadurch gekennzeichnet, dass** der Energiespeicher (26) von einer, insbesondere haushaltinternen, Wechselspannungsquelle (10), von einem Blockheizkraftwerk (BHKW) (18) und/oder einer Photovoltaik-Anlage (24) und/oder einer Windenergieanlage (18') aufladbar ist.

17. Verfahren nach Anspruch 16 **dadurch gekennzeichnet, dass** das, insbesondere haushaltsinterne, BHKW (18) einen Scheibengenerator (20) aufweist, der eine Wechselausgangsspannung, insbesondere eine hochfrequente Wechselspannung, die vorzugsweise ≥ 50 Hertz ist, generiert.

18. Verfahren nach einem der Ansprüche 16 oder 17 **dadurch gekennzeichnet, dass** zwischen dem Scheibengenerator (20) des BHKWs (18) und der Gleichspannungsquelle (6) mindestens ein zweiter Wechselrichter (8), insbesondere ein bidirektionaler Wechselrichter, geschaltet ist.

19. Verfahren nach einem der vorhergehenden Ansprüche **dadurch gekennzeichnet, dass** mindestens ein Wechselrichter (8) Gleichstrom richtet, der zum Aufladen des Energiespeichers (26)nutzbar ist.

20. Verfahren nach einem der Ansprüche 16 - 18 **dadurch gekennzeichnet, dass** der Energiespeicher (26) zu vorgebbaren Zeiten, insbesondere zu Nachtzeiten, und/oder zu Betriebszeiten des BHKWs (18) und/oder der Photovoltaik-Anlage (24) und/oder der Windenergieanlage (18'), aus der Wechselspannungsquelle (10) aufgeladen wird.

## Claims

1. A method for the parallel power supply of at least one consumer (4) with electrical energy that is carried out in an electrical system (2) having at least: One electrical direct voltage source (6), one power inverter (8), in particular a bidirectional power inverter, one measuring device (14), in particular an energy meter that measures the electrical output of at least one consumer (4), one electrical alternating voltage source (10) and one control element (12) that has at least one evaluation unit which analyzes the measured data from the at least one measuring device (14) to determine whether the consumer output is greater than the output available from the direct voltage source (6), and that once this condition is satisfied, the control element (12) establishes an electrically conductive connection (line link) (16), in particular by means of a switch between at least the alternating voltage source (10) and the at least one consumer (4), **characterized in that** the data of the measuring device (14) are transmitted to a receiver of a higher-level control center, and that the control element (12) receives data from the higher-level control center which specifies one of the voltage sources (6, 10, 18), and controls an infeed of electrical energy into the direct voltage source (6) and/or the alternating voltage source (10).

2. The method according to claim 1, **characterized in that** the control unit establishes an electrically conductive line link (16) that is switchable between at least one of the voltage sources (6, 10, 18) and at least one of the consumers (4) such that the at least one consumer (4) is fed from the electrical direct voltage source (6) by means of the power inverter (8) when said switching, in particular by means of data, is preferably specified by at least one power source parameter, and/or when the consumer output is less than or equal to the output available from the direct voltage source (6), or is fed at least partially from the electrical direct voltage source (6) by means of the power inverter (8) when the consumer output is greater than the available output from the direct voltage source (6), and/or is fed from the electrical alternating voltage source (10) when said switching is specified in particular by means of data, preferably by at least one power source parameter.

3. The method according to claim 1, **characterized in that** the control element (12) controls an infeed of electrical energy into a public power grid.

4. The method according to one of the preceding claims, **characterized in that** the supply to the at least one consumer (4) is a parallel power supply to a low-voltage system.

5. The method according to one of the preceding claims, **characterized in that** the electrical system (2) has a measuring device (14), an energy meter, to measure an electrical output of the at least one consumer (4).

6. The method according to one of the preceding claims, **characterized in that** the electrical system (2) has a transformer and/or a boost converter (step-up converter).

7. The method according to one of the preceding claims, **characterized in that** the data from the measuring device (14) are transmitted via a data line or remotely to a receiver.

8. The method according to one of the preceding claims, **characterized in that** the control unit receives data from the measuring device (14) on at least one power source parameter that specifies a least one of the voltage sources (6, 10, 18).

9. The method according to one of the preceding claims, **characterized in that** the control element (12) establishes the switchable, electrically conductive line link (16) between the direct voltage source (6) and the at least one consumer (4) when the received data specifies an drawn output from the direct voltage source (6).

10. The method according to one of the preceding claims, **characterized in that** the control element (12) bidirectionally controls an electrical energy infeed via a bidirectional power inverter (8) into the direct voltage source (6) and/or the alternating voltage source (10).

11. The method according to one of the preceding claims, **characterized in that** the electrical alternating voltage source (6) has an energy store (26).

12. The method according to claim 11, **characterized in that** the energy store (26) is a storage battery, a lithium ion storage battery, a lithium-titanate storage battery, a lithium-iron-phosphate storage battery, and/or a lead or nickel-containing storage battery.

13. The method according to one of claims 11 or 12, **characterized in that** the energy store (26) has a capacitor.

14. The method according to one of claims 11 - 13, **characterized in that** the energy store (26) can store an amount of in particular electrical energy that in particular is substantially greater than or equal to the amount which corresponds to a daily energy requirement of the at least one consumer (4).

15. The method according to one of claims 11 - 14, **characterized in that** output is transmitted to the at least one consumer (4), substantially or exclusively from the energy store (26), in particular from the storage battery.

16. The method according to one of claims 11 - 15, **characterized in that** the energy store (26) can be charged from an in particular in-house alternating voltage source (10) from a communal heating plant (CHP plant) (18) and/or a photovoltaic system (24), and/or a wind turbine (18').

17. The method according to claim 16, **characterized in that** the in particular in-house CHP plant (18) has a disk generator (20) which generates an alternating output voltage, in particular a high frequency output voltage, that is preferably ≥ 50 Hz.

18. The method according to one of claims of 16 or 17, **characterized in that** at least one second power inverter (8), in particular a bidirectional power inverter, is between the disk generator (20) of the CHP plant (18) and the direct voltage source (6).

19. The method according to one of the preceding claims, **characterized in that** at least one power inverter (8) inverts direct current which can be used for charging the energy store (26).

20. The method according to one of claims 16 - 18, **characterized in that** the energy store (26) is charged from the alternating voltage source (10) at specifiable times, in particular at night-time, and/or during the times of operation of the CHP plant (18) and/ or the photovoltaic plant (24), and/or the wind turbine (18').

## Revendications

1. Procédé pour l'alimentation en réseau parallèle d'au moins un consommateur (4) en énergie électrique, qui est exécuté dans une installation électrique (2) présentant au moins : une source de tension continue électrique (6), un onduleur (8), en particulier un onduleur bidirectionnel, un dispositif de mesure (14), en particulier un compteur d'énergie qui mesure une énergie électrique de l'au moins un consommateur (4), une source de tension alternative électrique (10) et un élément de commande (12) présentant au moins une unité d'évaluation qui analyse les données de mesure de l'au moins un dispositif de mesure (14) afin de déterminer si la puissance des consommateurs est supérieure à la puissance fournie par la source de tension continue (6), et que l'élément de commande (12), lorsque cette condition est remplie, établit une connexion électrique conductrice (connexion câblée) (16), en particulier au moyen d'un commutateur entre au moins la source de tension alternative (10) et le au moins un consommateur (4), **caractérisé en ce que** des données du dispositif de mesure (14) sont transmises à un récepteur d'une centrale de commande prioritaire et que l'élément de commande (12) reçoit des données de la centrale de commande prioritaire qui prédéfinissent au moins une des sources de tension (6, 10, 18), et commande une alimentation en énergie électrique de la source de tension continue (6) et/ou de la source de tension alternative (10).

2. Procédé selon la revendication 1, **caractérisé en ce que** l'unité de commande établit de manière commutable entre au moins une des sources de tension (6, 10, 18) et au moins un des consommateurs (4) une connexion câblée conductrice d'électricité (16) de manière à ce que le au moins un consommateur (4) soit alimenté depuis la source de tension continue électrique (6) via l'onduleur (8) lorsque cette commutation, en particulier par l'intermédiaire de données, de préférence par l'intermédiaire d'au moins un paramètre de source d'energie puissance, est prédéfinie, et/ou lorsque la puissance des consommateurs est inférieure ou égale à la puissance fournie par la source de tension continue (6), ou soit alimentée au moins partiellement par la source de tension continue électrique (6) via l'onduleur (8) lorsque la puissance des consommateurs est supérieure à la puissance fournie par la source de tension continue (6) et/ou soit alimentée depuis la source de tension alternative électrique (10) lorsque cette commutation, en particulier par l'intermédiaire de données, de préférence par l'intermédiaire d'au moins un paramètre source d'energie, est prédéfinie.

3. Procédé selon la revendication 1, **caractérisé en ce que** l'élément de commande (12) commande une alimentation en énergie électrique d'un réseau électrique public.

4. Procédé selon l'une quelconque des revendications précédentes, **caractérisé en ce que** l'alimentation de l'au moins un consommateur (4) est une alimentation en réseau parallèle dans un réseau basse tension.

5. Procédé selon l'une quelconque des revendications précédentes, **caractérisé en ce que** l'installation électrique (2) présente un dispositif de mesure (14), un compteur d'énergie, pour la mesure d'une énergie électrique de l'au moins un consommateur (4).

6. Procédé selon l'une quelconque des revendications précédentes, **caractérisé en ce que** l'installation électrique (2) présente un transformateur et/ou un hacheur élévateur (convertisseur élévateur).

7. Procédé selon l'une quelconque des revendications précédentes, **caractérisé en ce que** des données du dispositif de mesure (14) sont transmises à un récepteur via une ligne de données ou sans fil.

8. Procédé selon l'une quelconque des revendications précédentes, **caractérisé en ce que** l'unité de commande reçoit des données du dispositif de mesure (14) correspondant à au moins un paramètre de source d'energie qui prédéfinissent au moins une des sources de tension (6, 10, 18).

9. Procédé selon l'une quelconque des revendications précédentes, **caractérisé en ce que** l'élément de commande (12) établit entre la source de tension continue (6) et le au moins un consommateur (4) la connexion câblée (16) conductrice d'électricité et commutable lorsque les données réceptrices prédéfinissent une alimentation en énergie par la source de tension continue (6).

10. Procédé selon l'une quelconque des revendications précédentes, **caractérisé en ce que** l'élément de commande (12) commande bidirectionnellement une alimentation en énergie électrique via un onduleur bidirectionnel (8) de la source de tension continue (6) et/ou de la source de tension alternative (10).

11. Procédé selon l'une quelconque des revendications précédentes, **caractérisé en ce que** la source de tension continue électrique (6) présente un accumulateur d'énergie (26).

12. Procédé selon la revendication 11, **caractérisé en ce que** l'accumulateur d'énergie (26) est un accumulateur, un accumulateur lithium-ion, un accumulateur lithium-titanate, un accumulateur lithium-fer-phosphate et/ou un accumulateur contenant du plomb ou du nickel.

13. Procédé selon l'une quelconque des revendications 11 ou 12, **caractérisé en ce que** l'accumulateur d'énergie (26) présente un condensateur.

14. Procédé selon l'une quelconque des revendications 11-13, **caractérisé en ce que** l'accumulateur d'énergie (26) peut accumuler en particulier de l'énergie électrique en une quantité en particulier essentiellement supérieure ou égale à la quantité correspondant à une consommation d'énergie quotidienne de l'au moins un consommateur (4).

15. Procédé selon l'une quelconque des revendications 11-14, **caractérisé en ce que** de l'énergie est transmise à l'au moins un consommateur (4) essentiellement ou exclusivement depuis l'accumulateur d'énergie (26), en particulier depuis l'accumulateur.

16. Procédé selon l'une quelconque des revendications 11-15, **caractérisé en ce que** l'accumulateur d'énergie (26) peut être chargé par une source de tension alternative (10), en particulier domestique, par une centrale de cogénération (BHKW) (18) et/ou une installation photovoltaïque (24) et/ou une installation d'énergie éolienne (18').

17. Procédé selon la revendication 16, **caractérisé en ce que** la centrale de cogénération (18), en particulier domestique, présente un alternateur discoïde (20) qui génère une tension de sortie alternative, en particulier une tension alternative à haute fréquence de préférence ≥ 50 Hertz.

18. Procédé selon l'une quelconque des revendications 16 ou 17, **caractérisé en ce qu'**est mis en circuit entre l'alternateur discoïde (20) de la centrale de cogénération (18) et la source de tension continue (6) au moins un deuxième onduleur (8), en particulier un onduleur bidirectionnel.

19. Procédé selon l'une quelconque des revendications précédentes, **caractérisé en ce qu'**au moins un onduleur (8) redresse du courant continu utilisable pour le chargement de l'accumulateur d'énergie (26).

20. Procédé selon l'une quelconque des revendications 16 - 18, **caractérisé en ce que** l'accumulateur d'énergie (26) est chargé à des heures pouvant être définies au préalable, en particulier pendant la nuit, et/ou pendant les heures de service de la centrale de cogénération (18) et/ou de l'installation photovoltaïque (24) et/ou de l'installation d'énergie éolienne (18') depuis la source de tension alternative (10).
